# EUROPÄISCHE PATENTSCHRIFT

(11) **EP 1 680 298 B1**
(45) Veröffentlichungstag und Bekanntmachung des Hinweises auf die Patenterteilung: **07.01.2009**
(21) Anmeldenummer: 04789948.9
(22) Anmeldetag: 08.10.2004
(51) Int. Cl.: B60J 7/12

(54) **CABRIOLET-FAHRZEUG**
CONVERTIBLE VEHICLE
VEHICULE CABRIOLET

(30) Priorität: 24.10.2003 DE 10349821
(43) Veröffentlichungstag der Anmeldung: 19.07.2006
(73) Patentinhaber: Wilhelm Karmann GmbH, 49084 Osnabrück (DE)
(72) Erfinder: LICHER, Klaus, 49124 Georgsmarienhütte (DE); SCHONHORST, Heiko, 49492 Westerkappeln (DE)
(86) Internationale Anmeldenummer: PCT/DE2004/002239
(87) Internationale Veröffentlichungsnummer: WO 2005/039909

(56) Entgegenhaltungen:
- EP-A- 0 628 438
- EP-A- 1 393 948
- DE-A1- 4 405 356
- DE-A1- 19 647 680
- US-A- 5 738 402

## Beschreibung

Die Erfindung betrifft ein Cabriolet-Fahrzeug mit einem beweglichen Dach, das teilweise oder vollständig mit einem flexiblen Bezug versehen ist, nach dem Oberbegriff des Anspruchs 1.

Ein solches Cabriolet-Fahrzeug, weist häufig - außerhalb einer Heckscheibe - über sein gesamtes Dach einen flexiblen Dachbezug auf oder aber kann auch etwa in seinem vorderen Bereich ein festes Dachteil und nur in seinem hinteren Bereich einen über die Fahrzeugbreite erstreckten flexiblen Bezug umfassen. In jedem Fall kann der Dachbezug sowohl an seitliche Rahmenteile eines das bewegliche Dach stützenden Dachgestells als auch in seinem hinteren Bereich an ein im wesentlichen quer zum Fahrzeug verlaufendes und als Spannbügel ausgebildetes Rahmenteil angebunden sein und darüber bei geschlossenem Dach auf einem Karosserieteil aufliegend gespannt werden, wie beispielsweise in der EP0628438 beschrieben ist.

Um eine hinreichende Dichtigkeit an den Randbereichen des Dachbezugs sicherzustellen und ein Aufwölben des Daches bei hoher Geschwindigkeit zu verhindern, ist eine linienhafte und stabile Verbindung der Randbereiche mit den jeweiligen Rahmenteilen erforderlich.

Hierzu ist es bekannt, Ränder des Dachbezugs mit Halteleisten zu verbinden, etwa linienhaft zu vernähen, wobei die Halteleisten dann über mehrere, im Verlauf der jeweiligen Rahmenteile aufeinander folgende und quer zu diesen gesetzte Nieten mit dem jeweiligen Rahmenteil verbunden werden. Ein eventuell nach Beschädigung oder Verschleiß gewünschtes Auswechseln des Dachbezugs erfordert dann ein Ausbohren sämtlicher Nieten und ist dadurch erschwert.

Der Erfindung liegt das Problem zugrunde, ein Cabriolet-Fahrzeug der genannten Art hinsichtlich der Festlegung des Dachbezugs an einem das bewegliche Dach stützenden Dachgestell zu verbessern.

Die Erfindung löst dieses Problem durch ein Cabriolet-Fahrzeug mit den Merkmalen des Anspruchs 1 sowie durch ein Fahrzeugdach mit den Merkmalen des Anspruchs 12 und eine Halteleiste mit den Merkmalen des Anspruchs 13. Vorteilhafte Ausgestaltungen des Gegenstandes der Erfindung ergeben sich aus den weiteren Ansprüchen 2 bis 11.

Mit der Erfindung ist eine sichere und gegenüber dem Stand der Technik einfacher lösbare Verbindung des Dachbezugs an Rahmenteilen des Dachgestells geschaffen.

Wenn etwa an einem Rahmenteil neben mehreren längs erstreckten Haken oder ähnlichen formschlüssigen Eingriffsmitteln nur eine Quersicherung, etwa eine Schraube oder ein Niet, als Auszugssicherung vorgesehen ist, muß zur Lösung der Verbindung nur diese eine Quersicherung entfernt werden. Die Haken können dann einfach herausgezogen werden.

Durch die parallel zum jeweiligen Rahmenteil einzugehende Verbindung einer Halteleiste mit dem jeweiligen Rahmenteil kann einer in dieser Richtung wirkenden Kraft besonders gut entgegengewirkt werden. Besonders vorteilhaft ist eine solche Verbindung daher für seitlich aufragende Hauptsäulen des Dachgestells, also die Rahmenteile, die sich seitlich von der Fensterbrüstungslinie zu einem im wesentlichen horizontal liegenden Dachbereich erstrecken. An der Hauptsäule wirkt bei geschlossenem Dach auf die Verbindung zum Dachbezug eine erhebliche Kraftkomponente parallel zu ihrem Verlauf.

Ein Einschieben der Hakenteile mit einer Komponente in Fahrtrichtung wirkt dieser Kraft sehr zuverlässig entgegen.

Fertigungstechnisch besonders günstig ist es, wenn die Halteleiste mit den Haken jeweils einstückig ausgebildet sind.

Die Verbindung der Halteleisten mit dem Dachbezug bleibt auch mit der Erfindung genau so wie bisher möglich.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:
- Fig. 1: eine schematische perspektivische An- sicht von schräg hinten eines oberen Be- reichs eines erfindungsgemäßen Cabrio- let-Fahrzeugs mit geschlossenem Dach, der Übersichtlichkeit halber nur links- seitig einer vertikalen Längsmittelebene eingezeichnet,

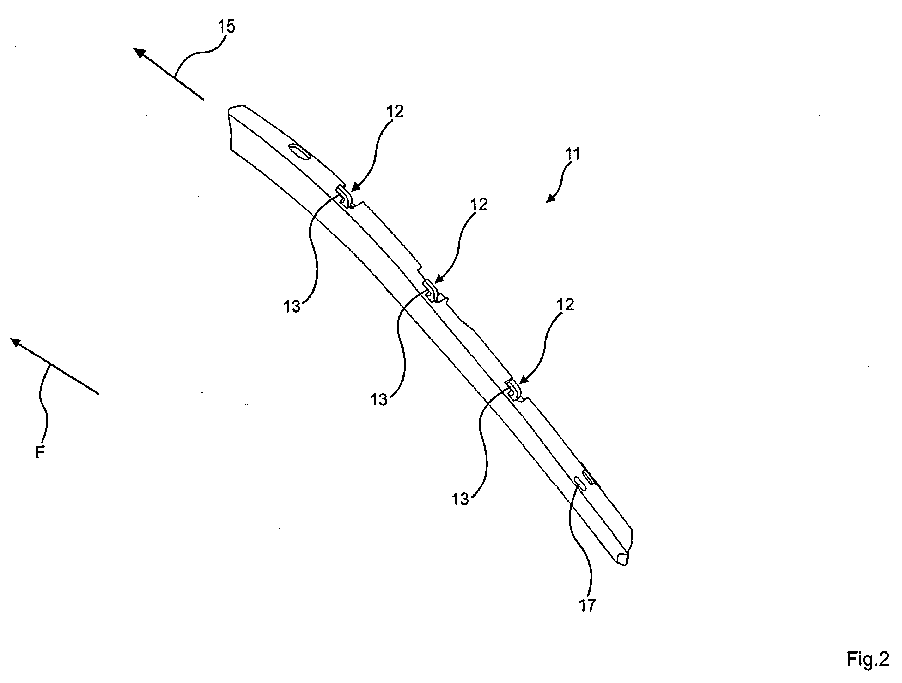

- Fig. 2: eine in etwa der Einbaulage nach Figur 1 entsprechend orientierte perspektivische Einzelteildarstellung einer der Haupt- säule zugeordneten Halteleiste mit hier drei Haken und einer Durchgangsbohrung für eine Auszugssicherung,
- Fig. 3: die Halteleiste nach Fig. 1 in aus dem Fahrzeuginnern gesehener Seitenansicht,

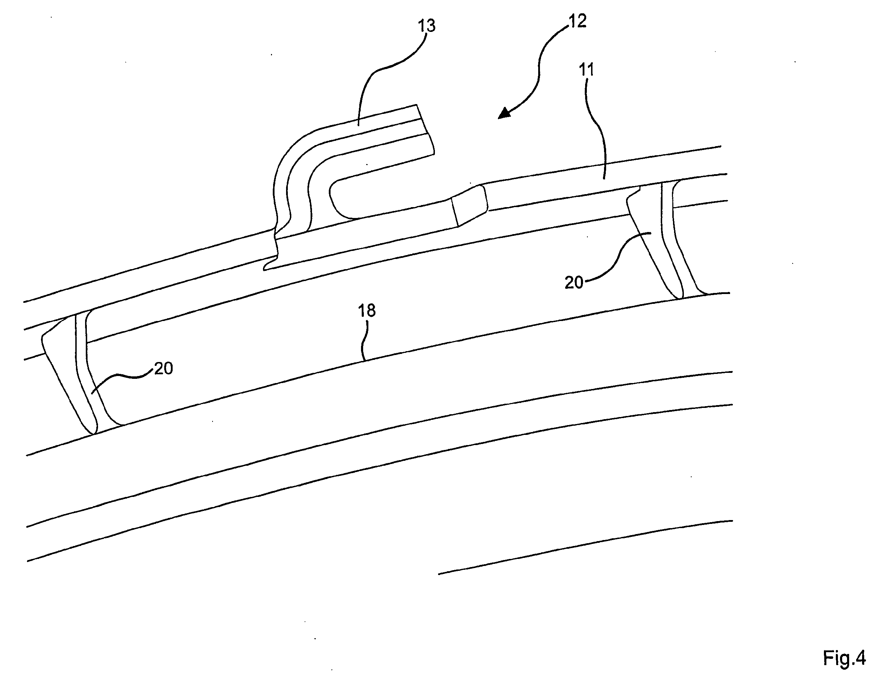

- Fig. 4: das Detail IV in Fig. 3,

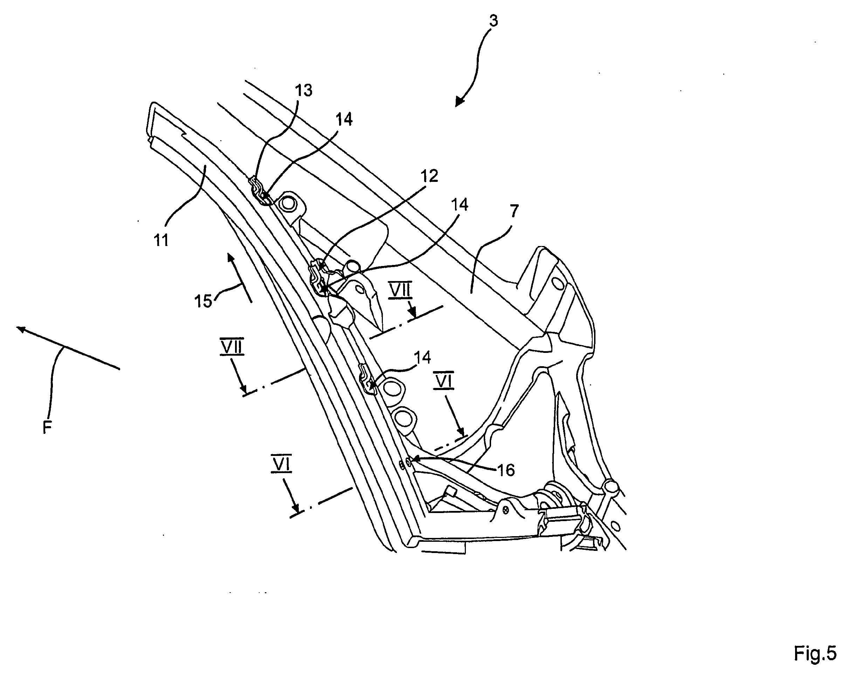

- Fig. 5: eine Detailansicht einer in etwa der Einbaulage nach Figur 1 entsprechend o- rientierten Hauptsäule mit anmontierter Halteleiste,
- Fig. 6: einen Schnitt etwa entsprechend der Li- nie VI-VI in Fig. 5,

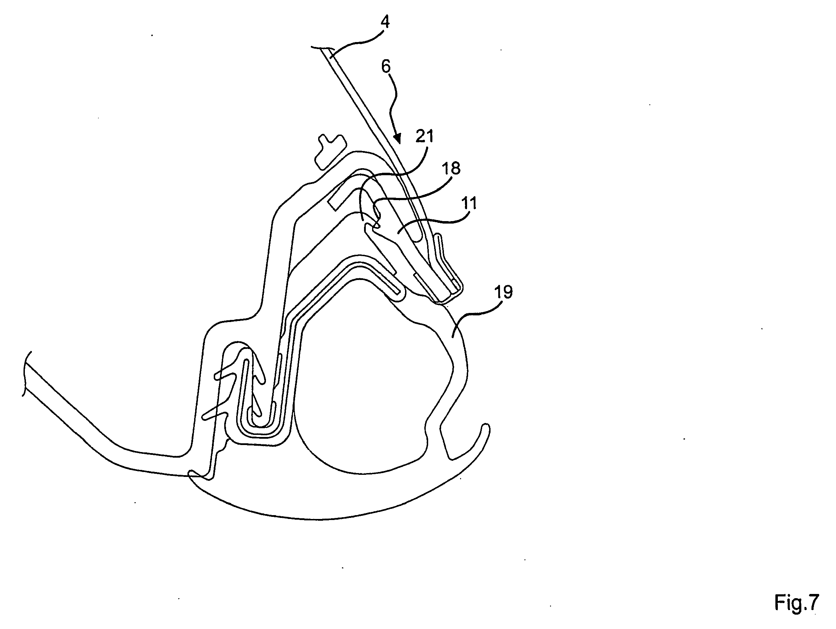

- Fig. 7: einen Schnitt etwa entsprechend der Li- nie VII-VII in Fig. 5.

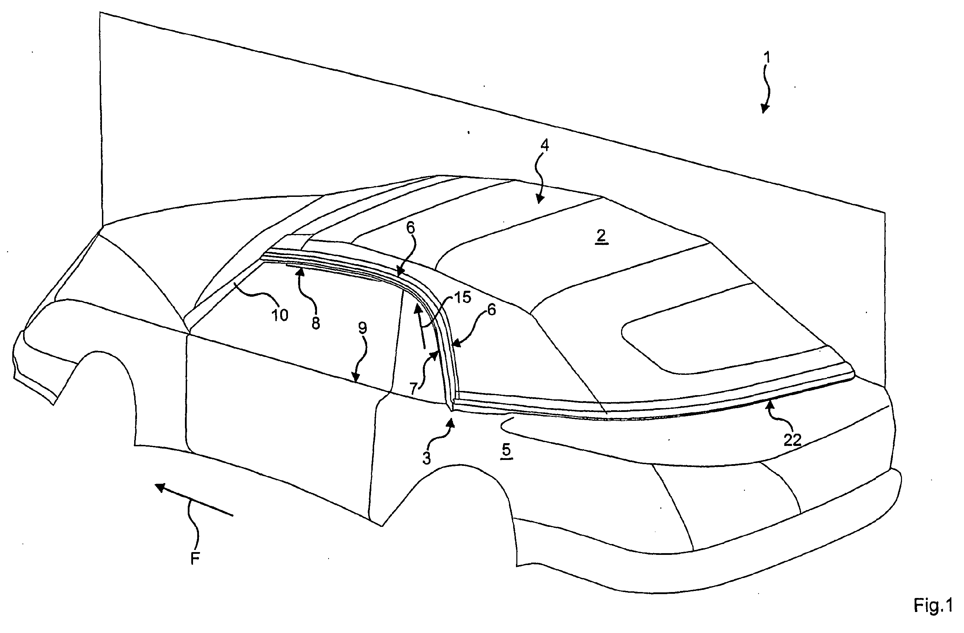

Das in Fig. 1 nur abgebrochen und in seinem oberen Bereich schematisch dargestellte Cabriolet-Fahrzeug 1 ist als zweisitziger Sportwagen ausgebildet und umfaßt ein bewegliches Dach 2, das hier ein insgesamt mit 3 bezeichnetes bewegliches Gestell umfaßt, das vollständig von einem Dachbezug 4 überspannt ist. Alternativ ist auch möglich, daß ein flexibler Bezug nur in einem Teil des Daches 2 vorgesehen ist und das Dach außerhalb des flexiblen Bereichs ein oder mehrere starre Außenhautteile umfaßt. Das Dach 2 kann insgesamt zu seiner Öffnung auf oder in der Karosserie 5 ablegbar sein.

Der Dachbezug 4 ist bei dem hier dargestellten Cabriolet-Fahrzeug 1 mit seinen quer außen liegenden Rändern 6 an seitlichen Rahmenteilen 7, 8 des Dachgestells 3 festgelegt. Hier sind pro Fahrzeugseite jeweils zwei Rahmenteile 7, 8 vorgesehen, was nicht zwingend ist. Insbesondere bei einem größeren, mit Rücksitzen versehenen Cabriolet-Fahrzeug kommen auch mehr seitliche Rahmenteile in Betracht.

Das Rahmenteil 7 ist hier als sog. Hauptsäule ausgebildet und erstreckt sich von einer Fensterbrüstungslinie 9 aufwärts und in Fahrtrichtung F vorwärts geneigt bis zu einem etwa im oberen Kopfbereich der Insassen liegenden Übergang zum vorderen, eher horizontal liegenden Rahmenteil 8. Dadurch, daß das Dach 2 im geschlossenen Zustand vorne an einem Windschutzscheibenrahmen 10 und hinten über einen quer zum Fahrzeug liegenden Spannbügel 22 gespannt ist, wirken somit gerade an der Hauptsäule 7 hohe Zugkräfte auf den Dachbezug 4 ein, die bestrebt sind, diesen von der Verbindung mit der Hauptsäule 7 zu lösen.

Der Dachbezug 4, der etwa textil oder auch aus einem Kunststoff ausgebildet sein kann, ist daher jeweils linienhaft mit den Rahmenteilen 7, 8 verbunden und hierzu an seinen Rändern 6 mit einer oder hier mehreren Halteleisten 11 vernäht, verschweißt, verklebt oder in ähnlicher Weise dauerhaft und zumindest nahezu über die gesamte Länge der jeweiligen Halteleiste 11 verbunden. Auch ein Schweißkleben kommt in Betracht.

Die Halteleiste 11 kann aus einem leichten Kunststoff, beispielsweise Polyamid, hergestellt sein, und ist hier mit mehreren, fluchtend hintereinander liegenden Haken 12 versehen. Diese können, wie dargestellt, zur produktionstechnischen Vereinfachung einstückig mit der Halteleiste 11 ausgebildet. Die Hakenköpfe 13 sind parallel zueinander und zur Erstreckungsrichtung der Halteleiste 11 ausgerichtet. Die Rahmenteile 7, 8 oder weitere sind mit komplementären, ihrem Verlauf folgend längs erstreckten Ausnehmungen 14 versehen, die hinreichend lang sind, daß sie jeweils ein Hakenkopf 13 durchgreifen kann.

Zur Montage des Daches 2 wird zunächst der Dachbezug 4 mit der oder den Halteleisten 11 in der oben geschilderten Weise dauerhaft verbunden. Dann werden die Halteleisten 11 derart mit dem Gestell 3 verbunden, daß die Haken 12 in Ausnehmungen 14 der Rahmenteile 7, 8 eingeführt und die Halteleisten 11 mit einer Bewegungskomponente in Fahrtrichtung F parallel zu dem jeweiligen Rahmenteil 7, 8 in Richtung des Pfeils 15 bewegt werden, so lange, bis die Köpfe 13 der Haken 12 hinter den Randkanten der Ausnehmungen 14 formschlüssig gesichert sind. Um ein Zurückbewegen der Halteleiste 11 gegen die Einschubrichtung 15 zu verhindern, kann eine Auszugssperre 16 montiert werden, etwa in Gestalt eines einzelnen Niets, einer Schraube oder dergleichen, der eine Bohrung 17 der Halteleiste 11 und das jeweilige Rahmenteil 7, 8 durchgreift. Da die Zugkraft der Bezugsspannung in Einschubrichtung 15 wirkt, muß die Auszugssicherung 16 nur geringe Kräfte aufnehmen und kann klein dimensioniert werden. Je nach Einwirkung der Kräfte kann es auch möglich sein, die Einschubrichtung mit einer Komponente entgegen der Fahrtrichtung F vorzusehen.

Eine ähnliche Verbindung zwischen Bezug 4 und Dachgestell 3 kann zusätzlich oder alternativ auch an einem hinteren Spannbügel 22 verwirklicht sein, wobei dort aufgrund der Symmetrie bezüglich einer vertikalen Fahrzeuglängsmittelebene die Orientierung der Haken beliebig wäre. Auch die Verbindung des vorderen Rahmenteils 8 mit dem Rand 6 des Dachbezugs 4 kann erfindungsgemäß erfolgen.

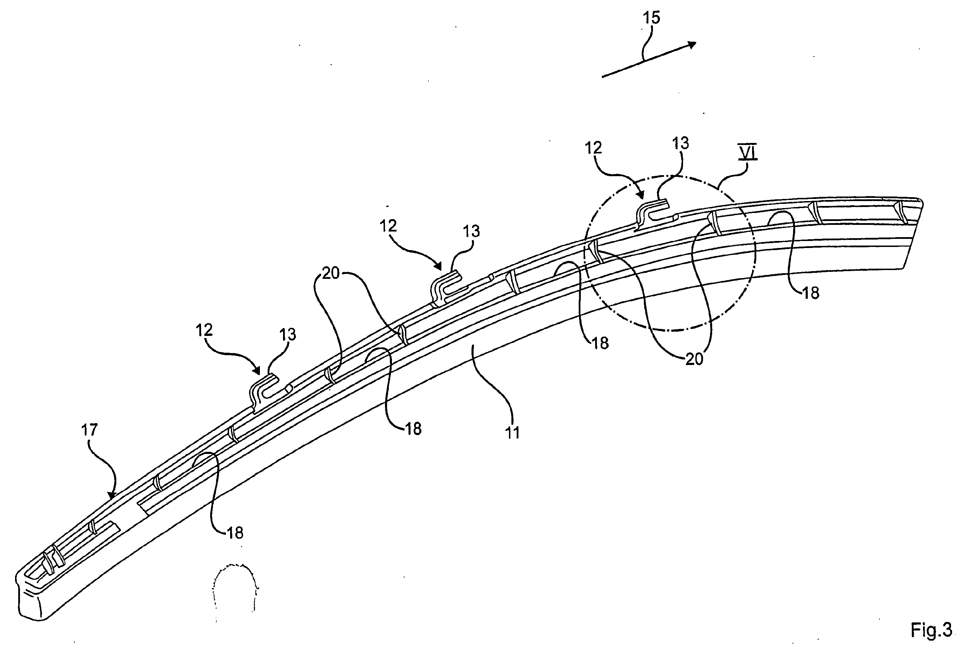

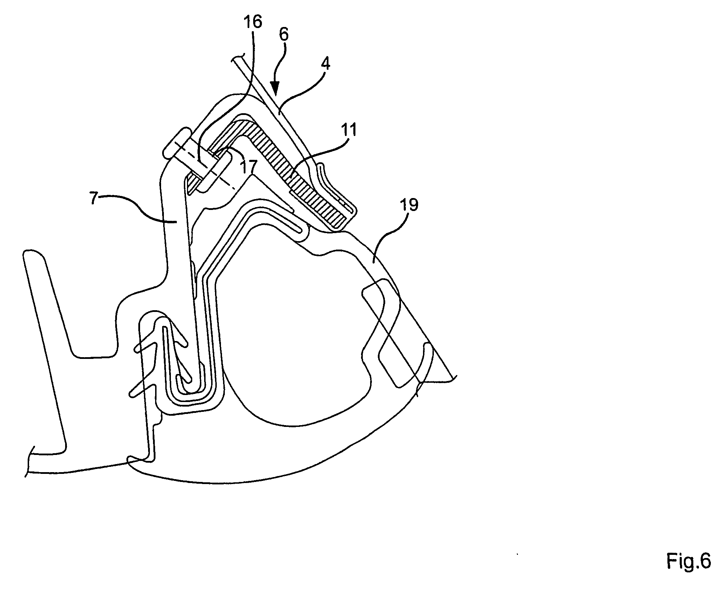

Wie in Fig. 6 erkennbar ist, ist die Halteleiste 11 über ihren Verlauf zumindest bereichsweise mit einer Stufe 18 versehen, auf der sich eine Dichtung 19, die den Rand 6 des Daches 2 gegen Seitenscheiben oder die Karosserie abdichtet, abstützen kann. Die Stufe 18 kann dabei eine Rinne ausbilden, die jeweils durch einzelne Querstege 20 (s. Fig. 3) unterbrochen ist. Die Rinne 18 ist für den Eingriff eines komplementär unterbrochenen Fortsatzes 21 der Dichtung 19 vorgesehen. Damit kann nicht nur ein guter Halt der Dichtung 19, sondern auch deren genaue Längsausrichtung bezüglich der Halteleiste 11 sichergestellt werden.

## Patentansprüche

1. Cabriolet-Fahrzeug (1) mit einem beweglichen Dach (2), das zumindest in einem Teilbereich einen flexiblen Dachbezug (4) aufweist, der mit einem Teilabschnitt seines Außenrands (6) über zumindest eine Halteleiste (11) an zumindest einem Rahmenteil (7;8) eines Dachgestells (3) gehalten ist, wobei die Halteleiste (11) in Verbindungsstellung im wesentlichen parallel zu einem Rahmenteil (7;8) des Dachgestells (3) verläuft und an diesem gehalten ist,
**dadurch gekennzeichnet,**
**daß** die Halteleiste (11) mit dem Rahmenteil (7;8) über eine Bewegung mit einer parallel zu deren Erstreckung verlaufenden Bewegungskomponente (15) zum Erreichen der Verbindungsstellung verbindbar ist.

2. Cabriolet-Fahrzeug nach Anspruch 1,
**dadurch gekennzeichnet,**
**daß** die Halteleiste (11) mit dem Rahmenteil (7;8) über eine formschlüssige Verbindung verbindbar ist.

3. Cabriolet-Fahrzeug nach einem der Ansprüche 1 oder 2,
**dadurch gekennzeichnet,**
**daß** die Halteleiste (11) über ihren Verlauf mit mehreren ausgreifenden Haken (12) versehen ist.

4. Cabriolet-Fahrzeug nach Anspruch 3,
**dadurch gekennzeichnet,**
**daß** die Haken (12) einstückig mit der Halteleiste (11) ausgebildet sind.

5. Cabriolet-Fahrzeug nach einem der Ansprüche 3 oder 4,
**dadurch gekennzeichnet,**
**daß** das jeweilige Rahmenteil (7;8) mit in Anpassung an die Erstreckungsrichtung (15) der Haken (12) lang erstreckten Ausnehmungen (14) zur Aufnahme der Hakenköpfe (13) versehen sind.

6. Cabriolet-Fahrzeug nach einem der Ansprüche 1 bis 5,
**dadurch gekennzeichnet,**
**daß** zumindest jeder Fahrzeugquerseite jeweils zumindest eine Halteleiste (11) zugeordnet ist.

7. Cabriolet-Fahrzeug nach einem der Ansprüche 1 bis 6,
**dadurch gekennzeichnet,**
**daß** einer jeweiligen Halteleiste (11) in Verbindungsstellung mit einem Rahmenteil (7;8) zumindest eine Auszugssicherung (16) zugeordnet ist, die eine Parallelverschiebung zwischen Halteleiste (11) und Rahmenteil (7;8) hemmt.

8. Cabriolet-Fahrzeug nach einem der Ansprüche 3 bis 7,
**dadurch gekennzeichnet,**
**daß** die Hakenköpfe (13) jeweils eine in Fahrtrichtung (F) weisende Komponente umfassen und zur Verbindung mit dem Rahmenteil (7;8) gegenüber diesem mit einer Bewegungskomponente in Fahrtrichtung (F) in dessen Ausnehmungen (14) einschiebbar sind.

9. Cabriolet-Fahrzeug nach einem der Ansprüche 1 bis 8,
**dadurch gekennzeichnet,**
**daß** einem hinteren, im wesentlichen quer zum Fahrzeug (1) verlaufenden Spannbügel zumindest eine Halteleiste (11) zugeordnet ist.

10. Cabriolet-Fahrzeug nach einem der Ansprüche 1 bis 9,
**dadurch gekennzeichnet,**
**daß** die Halteleiste(n) (11) aus Kunststoff, insbesondere Polyamid, besteht oder bestehen und mit dem Dachbezug (4) durch Klebung, Vernähen, Schweißkleben und/oder Schweißen verbunden ist oder sind.

11. Cabriolet-Fahrzeug nach einem der Ansprüche 1 bis 10,
**dadurch gekennzeichnet,**
**daß** die Halteleiste (11) eine Stufe (18) zur Abstützung eines übergreifenden Abschnitts einer parallel zum Rahmenteil (7;8) verlaufenden Dichtung (19) umfaßt.

12. Dach (2) für ein Cabriolet-Fahrzeug (1) nach einem der Ansprüche 1 bis 11.

13. Halteleiste (12) für ein Dach (2) nach Anspruch 12.

## Claims

1. A cabriolet vehicle (1) with a movable roof (2), which, at least in one portion, has a flexible roof covering (4) which is held with a section of its outer edge (6) by at least one retaining strip (11) at at least one frame part (7; 8) of a roof framework (3),
wherein the retaining strip (11), in the connecting position, runs substantially parallel to a frame part (7; 8) of the roof framework (3) and is held at this,
**characterised in that**
the retaining strip (11) can be connected to the frame part (7; 8) via a movement with a movement component (15) which runs parallel to the extension thereof in order to reach the connecting position.

2. The cabriolet vehicle according to Claim 1,
**characterised in that**
the retaining strip (11) can be connected to the frame part (7; 8) via a form-fitting connection.

3. The cabriolet vehicle according to one of Claims 1 or 2,
**characterised in that**
the retaining strip (11) is provided with several outwardly-reaching hooks (12) over its course.

4. The cabriolet vehicle according to Claim 3,
**characterised in that**
the hooks (12) are configured integrally with the retaining strip (11).

5. The cabriolet vehicle according to one of Claims 3 or 4,
**characterised in that**
the respective frame parts (7; 8) are provided with recesses (14), which are longitudinally extended to adapt to the extension direction (15) of the hooks (12), in order to receive the hook heads (13).

6. The cabriolet vehicle according to one of Claims 1 to 5,
**characterised in that**
at least one retaining strip (11) respectively is allocated to each vehicle transverse side.

7. The cabriolet vehicle according to one of Claims 1 to 6,
**characterised in that**
at least one pull-out safety device (16), which inhibits a parallel displacement between the retaining strip (11) and the frame part (7; 8), is allocated to a respective retaining strip (11) in the connecting position with a frame part (7; 8).

8. The cabriolet vehicle according to one of Claims 3 to 7,
**characterised in that**
the hook heads (13) each include a component pointing in the direction of travel (F) and, for the purposes of connection with the frame part (7; 8), can be pushed in relative to this with a movement component in the direction of travel (F) into the recesses (14) thereof.

9. The cabriolet vehicle according to one of Claims 1 to 8,
**characterised in that**
at least one retaining strip (11) is allocated to a rear spring clip which runs substantially transverse to the vehicle (1).

10. The cabriolet vehicle according to one of Claims 1 to 9,
**characterised in that**
**that** the retaining strip(s) (11) is or are made of plastic, in particular polyamide, and is or are connected to the roof covering (4) by means of gluing, sewing, weld-gluing and/or welding.

11. The cabriolet vehicle according to one of Claims 1 to 10,
**characterised in that**
the retaining strip (11) includes a step (18) for supporting an overlapping section of a seal (19) which runs parallel to the frame part (7; 8).

12. The roof (2) for a cabriolet vehicle (1) according to one of Claims 1 to 11.

13. The retaining strip (12) for a roof (2) according to Claim 12.

## Revendications

1. Véhicule cabriolet (1) comprenant un toit (2) mobile présentant au moins dans une zone partielle un revêtement de toit (4) flexible qui, grâce à une section partielle de son bord extérieur (6), est maintenu sur au moins un élément de cadre (7 ; 8) d'un châssis de toit (3) par l'intermédiaire d'au moins une barre de maintien (11), la barre de maintien (11) s'étendant, en position d'assemblage, substantiellement parallèlement à un élément de cadre (7 ; 8) du châssis de toit (3) et étant maintenue sur ce dernier,
**caractérisé en ce que**
la barre de maintien (11) peut être assemblée avec l'élément de cadre (7 ; 8) par l'intermédiaire d'un déplacement avec une composante de déplacement (15) s'étendant parallèlement à son extension, pour réaliser la position d'assemblage.

2. Véhicule cabriolet selon la revendication 1,
**caractérisé en ce que**
la barre de maintien (11) peut être assemblée avec l'élément de cadre (7 ; 8) par un assemblage à conjugaison de forme.

3. Véhicule cabriolet selon l'une des revendications 1 ou 2,
**caractérisé en ce que,**
sur son extension, la barre de maintien (11) est munie de plusieurs crochets (12) allongés.

4. Véhicule cabriolet selon la revendication 3,
**caractérisé en ce que**
les crochets (12) sont réalisés d'un seul tenant avec la barre de maintien (11).

5. Véhicule cabriolet selon l'une des revendications 3 ou 4,
**caractérisé en ce que**
l'élément de cadre (7 ; 8) respectif est muni d'évidements (14) destinés au logement des têtes de crochet (13) et s'étendant longitudinalement en s'ajustant au sens d'extension (15) des crochets (12).

6. Véhicule cabriolet selon l'une des revendications 1 à 5,
**caractérisé en ce que**
au moins une barre de maintien (11) est respectivement affectée à au moins chaque côté transversal du véhicule.

7. Véhicule cabriolet selon l'une des revendications 1 à 6,
**caractérisé en ce que**
à une barre de maintien (11) respective avec un élément de cadre (7 ;8) est affecté au moins un organe de sécurité anti-retrait (16) qui empêche un déplacement parallèle entre la barre de maintien (11) et l'élément de cadre (7 ; 8).

8. Véhicule cabriolet selon l'une des revendications 3 à 7,
**caractérisé en ce que**
les têtes de crochet (13) comportent respectivement une composante orientée dans le sens de la marche (F) et, pour l'assemblage avec l'élément de cadre (7 ; 8), peuvent être enfoncées dans les évidements (14) de ce dernier et par rapport à ce dernier avec une composante de déplacement dans le sens de la marche (F).

9. Véhicule cabriolet selon l'une des revendications 1 à 8,
**caractérisé en ce que**
au moins une barre de maintien (11) est affectée à un arceau de tensionnement arrière, s'étendant substantiellement transversalement au véhicule (1).

10. Véhicule cabriolet selon l'une des revendications 1 à 9,
**caractérisé en ce que**
la(les) barre(s) de maintien (11) est(sont) en matière plastique, en particulier en polyamide, et est ou sont assemblée(s) avec le revêtement de toit (4) par collage, couture, soudo-collage et/ou soudure.

11. Véhicule cabriolet selon l'une des revendications 1 à 10,
**caractérisé en ce que**
la barre de maintien (11) comprend un palier (18) pour le soutien d'un segment, présentant un chevauchement, d'un joint d'étanchéité (19) s'étendant parallèlement à l'élément de cadre (7 ; 8).

12. Toit (2) pour un véhicule cabriolet (1) selon l'une des revendications 1 à 11.

13. Barre de maintien (12) pour un toit (2) selon la revendication 12.
